(19) Europäisches Patentamt

European Patent Office

Office européen des brevets

(11) EP 1 314 700 A1

(12) EUROPEAN PATENT APPLICATION

(43) Date of publication:
28.05.2003 Bulletin 2003/22

(51) Int Cl.⁷: **C02F 9/04**, C02F 1/52,
C02F 1/42, C02F 1/58,
C07C 53/21
// C02F101/36, C02F103/38

(21) Application number: 02023652.7

(22) Date of filing: 21.10.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 22.11.2001 JP 2001357683
11.09.2002 JP 2002265527

(71) Applicant: ASAHI GLASS COMPANY LTD.
Tokyo 100-8405 (JP)

(72) Inventors:
• Funaki, Hiroshi
Ichihara-shi, Chiba (JP)
• Murotani, Eisuke
Kanagawa-ku, Yokohama-shi, Kanagawa (JP)
• Yanase, Koichi
Ichihara-shi, Chiba (JP)
• Kamiya, Hiroki
Ichihara-shi, Chiba (JP)

(74) Representative: Müller-Boré & Partner
Patentanwälte
Grafinger Strasse 2
81671 München (DE)

Remarks:
A request for correction in the description has been
filed pursuant to Rule 88 EPC. A decision on the
request will be taken during the proceedings before
the Examining Division (Guidelines for Examination
in the EPO, A-V, 3.).

(54) **Method for absorbing and recovering fluorine-containing emulsifier**

(57)    A method for adsorbing and recovering a fluorine-containing emulsifier at a high recovery from coagulation waste water of a fluoropolymer, is presented. An inorganic acid is added to coagulation waste water of a fluoropolymer containing a fluorine-containing emulsifier, to adjust the pH of the waste water to a level of at least 1 and less than 6, then a metal chloride having a solubility of at least 5 mass% in water at 25°C, or a hydrate of the metal chloride, is added to the waste water, to coagulate and remove a solid content and/or a substance convertible to a solid content, contained in the waste water, and then the waste water is contacted to a weakly basic anion exchange resin.

**Description**

The present invention relates to a method for adsorbing and recovering a fluorine-containing emulsifier by means of a weakly basic anion exchange resin.

Heretofore, methods for adsorbing and recovering fluorine-containing emulsifiers from various waste waters containing fluorine-containing emulsifiers by means of anion exchange resins (hereinafter referred to as IER), have been known.

JP-B-47-51233, U.S. Patent 4,282,162, DE 2,044,986, etc. disclose a method of recovering ammonium perfluorooctanoate (hereinafter referred to as APFO) as a fluorine-containing emulsifier contained in coagulation waste water of a fluoropolymer by adsorbing it on IER.

WO99/62830 discloses a method of adding a nonionic or cationic surfactant to coagulation waste water of a fluoropolymer to stabilize fine particles of polytetrafluoroethylene (hereinafter referred to as PTFE) in the coagulation waste water and thereby to prevent clogging of a packed column of IER.

JP-A-55-120630, U.S. Patent 5,312,935 and DE 2,908,001 disclose a method wherein coagulation waste water of PTFE is concentrated by a ultrafiltration method, and at the same time, a part of APFO used in the production of PTFE is recovered, and then APFO is adsorbed and recovered by IER.

JP-A-55-104651, U.S. Patent 4,282,162 and DE 2,903,981 disclose a method wherein APFO is adsorbed on IER and then perfluorooctanoic acid is desorbed and recovered by means of a mixture of an acid and an organic solvent.

WO99/62858 discloses a method wherein lime water is preliminarily added to coagulation waste water of a tetrafluoroethylene/perfluoro(alkyl vinyl ether) copolymer (hereinafter referred to as PFA) to adjust the pH to a level of from 6 to 7.5, then a metal salt such as aluminum chloride or iron chloride is added to coagulate the non-coagulated PFA, then the coagulates are mechanically separated and removed, then the pH of the obtained waste water is adjusted to a level of at most 7 with sulfuric acid, and APFO is adsorbed and recovered by means of strongly basic IER.

However, no literature has been known which describes to what extent the content of a solid content and/or a substance convertible to a solid content (Suspended Solid, hereinafter referred to as the SS component) which presents an adverse effect such as clogging of the packed column of IER, when a fluorine-containing emulsifier is adsorbed and recovered by IER from coagulation waste water of a fluoropolymer, has to be controlled.

Usually, prior to treating industrial waste water by an ion exchange resin, the contained SS component is removed. Also with respect to a fluoropolymer, the above-mentioned WO99/62858 discloses a method of removing the SS component containing non-coagulated dispersed particles of PFA, but such a method was not simple, and the removal rate of the SS component was not sufficiently high. Therefore, there was a problem that the packed column of IER was likely to be clogged by the adsorption operation for a long period of time.

Further, no effective method for preventing clogging of the packed column of IER has been known with respect to the adsorption and recovery of a fluorine-containing emulsifier from coagulation waste water of PTFE.

It is an object of the present invention to provide a method for adsorbing and recovering a fluorine-containing emulsifier, which comprises adding an inorganic acid to coagulation waste water of a fluoropolymer containing a fluorine-containing emulsifier, to adjust the pH of the waste water to a level of at least 1 and less than 6, then adding a metal chloride having a solubility of at least 5 mass% in water at 25°C, or a hydrate of the metal chloride, to the waste water, to coagulate and remove a solid content or a substance convertible to a solid content, contained in the waste water, and then contacting the waste water to a weakly basic ion exchange resin.

The present invention provides a method for adsorbing and recovering a fluorine-containing emulsifier, which comprises adding an inorganic acid to coagulation waste water of a fluoropolymer containing a fluorine-containing emulsifier, to adjust the pH of the waste water to a level of at least 1 and less than 6, then adding a metal chloride having a solubility of at least 5 mass% in water at 25°C, or a hydrate of the metal chloride, to the waste water, to coagulate and remove a solid content or a substance convertible to a solid content, contained in the waste water, and then contacting the waste water to a weakly basic ion exchange resin.

Now, the present invention will be described in detail with reference to the preferred embodiments.

In the present invention, the fluorine-containing emulsifier is preferably a salt of e.g. a perfluoroalkanoic acid, a ω-hydroperfluoroalkanoic acid, a ω-chloroperfluoroalkanoic acid or a perfluoroalkanesulfonic acid, having from 5 to 13 carbon atoms. Such a salt may be of a linear chain structure or a branched chain structure, or may be of a mixture of such structures. Further, it may contain an etheric oxygen atom in its molecule. If the number of carbon atoms is within this range, it is excellent in the effects as an emulsifier. The salt of such an acid is preferably an alkali metal salt such as a lithium salt, a sodium salt or a potassium salt, or an ammonium salt, more preferably an ammonium salt or a sodium salt, most preferably an ammonium salt.

Specific examples of the above acid include perfluoropentanoic acid, perfluorohexanoic acid, perfluoroheptanoic acid, perfluorooctanoic acid, perfluorononanoic acid, perfluorodecanoic acid, perfluorododecanoic acid, ω-hydroperfluoroheptanoic acid, ω-hydroperfluorooctanoic acid, ω-hydroperfluorononanoic acid, ω-chloroperfluoroheptanoic acid, ω-chloroperfluorooctanoic acid, ω-chloroperfluorononanoic acid, $CF_3CF_2CF_2OCF(CF_3)COOH$,

$CF_3CF_2CF_2OCF(CF_3)CF_2OCF(CF_3)COOH$, $CF_3CF_2CF_2O[CF(CF_3)CF_2O]_2CF(CF_3)COOH$, $CF_3CF_2CF_2O[CF(CF_3)CF_2O]_3CF(CF_3)COOH$, $CF_3CF_2CF_2CF_2OCF(CF_3)COOH$, perfluorohexanesulfonic acid, perfluoroheptanesulfonic acid, perfluorooctanesulfonic acid, perfluorononanesulfonic acid and perfluorodecanesulfonic acid.

Specific examples of the ammonium salt include ammonium perfluoropentanoate, ammonium perfluorohexanoate, ammonium perfluoroheptanoate, ammonium perfluorooctanate, ammonium perfluorononanoate, ammonium perfluorodecanoate, ammonium perfluorododecanoate, ammonium ω-hydroperfluoroheptanoate, ammonium ω-hydroperfluorooctanoate, ammonium ω-hydroperfluorononanoate, ammonium ω-chloroperfluoroheptanoate, ammonium ω-chloroperfluorooctanoate, ammonium ω-chloroperfluorononanoate, $CF_3CF_2CF_2OCF(CF_3)COONH_4$, $CF_3CF_2CF_2OCF(CF_3)CF_2OCF(CF_3)COONH_4$, $CF_3CF_2CF_2O[CF(CF_3)CF_2O]_2CF(CF_3)COONH_4$, $CF_3CF_2CF_2O[CF(CF_3)CF_2O]_3CF(CF_3)COONH_4$ and $CF_3CF_2CF_2CF_2OCF(CF_3)COONH_4$, ammonium perfluorohexanesulfonate, ammonium perfluoroheptanesulfonate, ammonium perfluorooctanesulfonate, ammonium perfluorononanesulfonate and ammonium perfluorodecanesulfonate.

Specific examples of the lithium salt include lithium perfluoropentanoate, lithium perfluorohexanoate, lithium perfluoroheptanoate, lithium perfluorooctanoate, lithium perfluorononanoate, lithium perfluorodecanoate, lithium perfluorododecanoate, lithium ω-hydroperfluoroheptanoate, lithium ω-hydroperfluorooctanoate, lithium ω-hydroperfluorononanoate, lithium ω-chloroperfluoroheptanoate, lithium ω-chloroperfluorooctanoate, lithium ω-chloroperfluorononanoate, $CF_3CF_2CF_2OCF(CF_3)COOLi$, $CF_3CF_2CF_2OCF(CF_3)CF_2OCF(CF_3)COOLi$, $CF_3CF_2CF_2O[CF(CF_3)CF_2O]_2CF(CF_3)COOLi$, $CF_3CF_2CF_2O[CF(CF_3)CF_2O]_3CF(CF_3)COOLi$, $CF_3CF_2CF_2CF_2OCF(CF_3)COOLi$, lithium perfluorohexanesulfonate, lithium perfluoroheptanesulfonate, lithium perfluorooctanesulfonate, lithium perfluorononanesulfonate and lithium perfluorodecanesulfonate.

Specific examples of the sodium salt include sodium perfluoropentanoate, sodium perfluorohexanoate, sodium perfluoroheptanoate, perfluorooctanoate, sodium perfluorononanoate, sodium perfluorodecanoate, sodium perfluorododecanoate, sodium ω-hydroperfluoroheptanoate, sodium ω-hydroperfluorooctanoate, sodium ω-hydroperfluorononanoate, sodium ω-chloroperfluoroheptanoate, sodium ω-chloroperfluorooctanoate, sodium ω-chloroperfluorononanoate, $CF_3CF_2CF_2OCF(CF_3)COONa$, $CF_3CF_2CF_2OCF(CF_3)CF_2OCF(CF_3)COONa$, $CF_3CF_2CF_2O[CF(CF_3)CF_2O]_2CF(CF_3)COONa$, $CF_3CF_2CF_2O[CF(CF_3)CF_2O]_3CF(CF_3)COONa$, $CF_3CF_2CF_2CF_2OCF(CF_3)COONa$, sodium perfluorohexanesulfonate, sodium perfluoroheptanesulfonate, sodium perfluorooctanesulfonate, sodium perfluorononanesulfonate and sodium perfluorodecanesulfonate.

Specific examples of the potassium salt include potassium perfluoropentanoate, potassium perfluorohexanoate, potassium perfluoroheptanoate, potassium perfluorooctanoate, potassium perfluorononanoate, potassium perfluorodecanoate, potassium perfluorododecanoate, potassium ω-hydroperfluoroheptanoate, potassium ω-hydroperfluorooctanoate, potassium ω-hydroperfluorononanoate, potassium ω-chloroperfluoroheptanoate, potassium ω-chloroperfluorooctanoate, potassium ω-chloroperfluorononanoate, $CF_3CF_2CF_2OCF(CF_3)COOK$, $CF_3CF_2CF_2OCF(CF_3)CF_2OCF(CF_3)COOK$, $CF_3CF_2CF_2O[CF(CF_3)CF_2O]_2CF(CF_3)COOK$, $CF_3CF_2CF_2O[CF(CF_3)CF_2O]_3CF(CF_3)COOK$, $CF_3CF_2CF_2CF_2OCF(CF_3)COOK$, potassium perfluorohexanesulfonate, potassium perfluoroheptanesulfonate, potassium perfluorooctanesulfonate, potassium perfluorononanesulfonate and potassium perfluorodecanesulfonate.

In the present invention, the fluorine-containing emulsifier is particularly preferably an ammonium salt of a perfluoroalkanoic acid having from 6 to 12 carbon atoms, more preferably ammonium perfluoroheptanoate, APFO, ammonium perfluorononanoate, or ammonium perfluorodecanoate. Further, APFO, or a lithium salt, a sodium salt or a potassium salt of perfluorooctanoic acid, is preferred, and APFO is most preferred.

In the present invention, the coagulation waste water of a fluoropolymer is preferably coagulation waste water from a process for producing a polymer of a fluoromonomer or a copolymer of a fluoromonomer with a monomer other than the fluoromonomer. Here, the coagulation waste water from such production process is waste water after coagulating by e.g. salting out and separating a fluoropolymer from an aqueous dispersion of the fluoropolymer obtained by emulsion polymerization or aqueous dispersion polymerization of a fluoromonomer, or a fluoromonomer and a monomer other than the fluoromonomer. Such waste water contains the fluorine-containing emulsifier used for the polymerization of the fluoromonomer.

The fluoromonomer may, for example, be a fluoroethylene such as tetrafluoroethylene (hereinafter referred to as TFE), $CF_2=CFCl$, $CFH=CF_2$, $CFH=CH_2$ or $CF_2=CH_2$ (hereinafter referred to as VdF), a fluoropropylene such as hexafluoropropylene (hereinafter referred to as HEP) or $CF_2=CHCF_3$, a perfluorovinyl ether having from 3 to 10 carbon atoms, such as $CF_2=CFOCF_3$, $CF_2=CFO(CF_2)_2CF_3$ (hereinafter referred to as PPVE) or $CF_2=CFO(CF_2)_4CF_3$, or a (perfluoroalkyl)ethylene having from 4 to 10 carbon atoms, such as $CH_2=CH(CF_2)_3CF_3$. These fluoromonomers may be used alone or in combination as a mixture of two or more of them.

The monomer other than the fluoromonomer may, for example, be a vinyl ester such as vinyl acetate, a vinyl ether such as ethyl vinyl ether, cyclohexyl vinyl ether or hydroxybutyl vinyl ether, a monomer having a cyclic structure such as norbornene or norbornadiene, an allyl ether such as methyl allyl ether, or an olefin such as ethylene (hereinafter referred to as E), propylene (hereinafter referred to as P) or isobutylene. Such monomers other than the fluoromonomers may be used alone or in combination as a mixture of two or more of them.

In the present invention, the fluoropolymer may, for example, be PTFE, a TFE/P copolymer, a TFE/P/VdF copolymer, a TFE/HFP copolymer, a TFE/PPVE copolymer, a E/TFE copolymer or a polyvinylidene fluoride. More preferred is PTFE, a TFE/P copolymer, a TFE/P/VdF copolymer or a TFE/PPVE copolymer, and most preferred is PTFE.

In the present invention, an inorganic acid is added to the coagulation waste water of a fluoropolymer to adjust the pH of the waste water to a level of at least 1 and less than 6. If the pH is less than 1, it will be required to use a large amount of an inorganic acid for the pH adjustment, and further, the material for the container or pipes to be used for the pH adjustment will be limited. If the pH is 6 or higher, the coagulation efficiency of the SS component tends to be low. Further, if the SS component is coagulated at a pH of 6 or higher, fine coagulates will form and their separation tends to be difficult. More preferably, the pH is at least 2 and less than 4.

The inorganic acid to be used for the pH adjustment is preferably at least one member selected from the group consisting of sulfuric acid, nitric acid, and hydrochloric acid is most preferred. If the pH is adjusted to be low, the fluorine-containing emulsifier tends to change from a solid form to an acid form. When such an inorganic acid, especially hydrochloric acid, is used, the efficiency for the fluorine-containing emulsifier and/or the fluorine-containing emulsifier converted to an acid form to be adsorbed on the weakly basic IER, will be improved.

In the present invention, the pH of the waste water is adjusted to a level of at least 1 and less than 6, as described above, and then, a metal chloride having a solubility of at least 5 mass% in water at 25°C, or a hydrate of such a metal chloride, is added to the waste water, to coagulate and remove the SS component contained in the waste water.

The metal chloride has a solubility of at least 5 mass% in water at 25°C. If the solubility is smaller than this, it tends to be difficult to dissolve the metal chloride in an amount required for coagulation. Preferably, the solubility is at least 20 mass%, and more preferably, it is at least 40 mass%. As such a metal chloride, a chloride of a polyvalent metal is preferred. Such a metal chloride will act as a coagulant for the SS component, and the chloride of a polyvalent metal has a large coagulating force for the SS component. Specific examples of such a metal chloride include metal chlorides such as aluminum chloride, aluminum chloride hexahydrate, magnesium chloride, magnesium chloride hexahydrate, ferrous chloride, ferric chloride, ferric chloride hexahydrate, and polyaluminum chloride. The solubility of aluminum chloride in water at 25°C is 46.8 mass%, the solubility of aluminum chloride hexahydrate in water at 25°C is at least 80 mass%, the solubility of magnesium chloride in water at 25°C is 54.6 mass%, the solubility of magnesium chloride hexahydrate in water at 25°C is 26.0 mass%, the solubility of ferrous chloride in water at 25°C is 64.5 mass%, the solubility of ferric chloride in water at 25°C is 91.9 mass%, the solubility of ferric chloride hexahydrate in water at 25°C is 47.9 mass%, and polyaluminum chloride can be mixed with water in any optional ratio.

The metal chloride is added preferably in an amount of at least 10 ppm and less than 500 ppm, more preferably at least 10 ppm and less than 200 ppm, based on the coagulation waste water. If the amount is less than 10 ppm, removal of the SS component tends to be inadequate, and if the amount is 500 ppm or more, sedimentation of coagulates tend to be poor, and the coagulates tend to be viscous, whereby solid-liquid separation tends to be difficult, and chlorine ions in the metal chloride tend to inhibit adsorption of the fluorine-containing emulsifier on the weakly basic IER.

In the present invention, it is preferred to stir the coagulation waste water, when the SS component is to be coagulated by the addition of the metal chloride to the coagulation waste water. The stirring method is not particularly limited, but is preferably one not to mechanically destroy the coagulated particles by stirring. As agitator for such a stirring apparatus, agitator capable of uniformly mixing the entire waste water at a low rotational speed, is preferred, and it is preferably one type selected from the group consisting of FULLZONE® impeller, MAXBLEND® impeller and anchor impeller. The value G during stirring at the agitator is preferably from 1 to 300, more preferably from 5 to 250, most preferably from 10 to 200. Here, the value G is a value led by the following formula.

$$G = \sqrt{\frac{P}{V \cdot \mu}}$$

where P represents the stirring power (W), V represents the liquid volume (m³), and μ represents the liquid viscosity coefficient (Pa·S).

In the present invention, the method for removing coagulates of the SS component coagulated by an addition of the above metal chloride to the coagulation waste water, may, for example, be a common solid-liquid separation method, and it is particularly preferred to employ at least one method selected from the group consisting of filtration, decantation, centrifugal separation and thickener. The filtration may preferably be carried out under a pressure. It is preferred that the waste water containing coagulates is left to stand still to let the coagulates settle, and the supernatant is filtered to remove the coagulates. Further, from the viewpoint of e.g. efficiency in the maintenance of the installation, thickener or screw decanter is most preferred.

In the present invention, specific examples of the SS component include dispersed particles of non-coagulated fluoropolymer, coagulated fluoropolymer particles, foreign matter included in a route for waste water treatment and metal salts which precipitate on an acid side. Usually, dispersed particles of non-coagulated fluoropolymer are contained in the coagulation waste water. If the SS component remains in the coagulation waste water, it tends to cause clogging of the tower packed with IER in the process for adsorbing and recovering the fluorine-containing emulsifier by means of IER, whereby the useful period of IER tends to be remarkably shortened. The content of the SS component in the coagulation waste water to be supplied to the packed column of IER is preferably from 0.01 to 45 ppm. In order to reduce the SS component too much, the amount of the metal chloride to be added in the pretreatment tends to be large, such being undesirable. It is more preferably from 0.01 to 20 ppm, most preferably from 0.01 to 10 ppm.

In the present invention, after removing the SS component, the fluorine-containing emulsifier is adsorbed and recovered by means of a weakly basic IER. A strongly basic IER provides high adsorption of the fluorine-containing emulsifier, but the desorption is low, and with respect to the final recovery of the fluorine-containing emulsifier, the weakly basic IER is superior.

The weakly basic IER may, for example, be an acrylic resin having tertiary amino groups or quaternary ammonium groups as ion exchange groups on its side chains, or a polystyrene having dimethylamino groups as ion exchange groups on its side chains. Particularly preferred is a polystyrene having dimethylamino groups on its side chains.

Specific examples of commercially available weakly basic IER include Diaion WA10, WA11, WA20, WA21, WA21J and WA30, manufactured by Mitsubishi Chemical Corporation, Lewatit MP62, MP64, VPOC1065, VPOC1072 and VPOC1094, manufactured by Bayer, and Amberlite IRA67, IRA69SB, XT6050RF and XE583, manufactured by ORGANO Corporation.

The method for adsorbing and recovering a fluorine-containing emulsifier of the present invention, can be applicable not only to the above-mentioned fluorine-containing emulsifier, but also to e.g. a low molecular weight fluorocarboxylic acid such as trifluoroacetic acid or pentafluoropropanoic acid and/or its salt, or to a trifluoromethanesulfonic acid and/or its salt.

Now, the present invention will be described in further detail with reference to Examples. However, it should be understood that the present invention is by no means restricted thereto. Here, the concentration of APFO, perfluorooctanoic acid or sodium perfluorooctanoate, was measured by means of a high performance liquid chromatography mass spectrum method using a mixed solution of methanol and water as the solvent. The species to be detected by this method is fluorooctanoate ($C_7F_{15}COO^-$). Further, for the measurement of the SS component in the coagulation waste water, the following method was employed.

Measurement of SS component in waste water (unit: mass%)

10 g of coagulation waste water after coagulating and separating PTFE from an aqueous dispersion of PTFE, was put into a halogen type water content meter HR-73, manufactured by METTLER TOLEDO K.K. and dried until the mass became constant at 200°C, whereupon the evaporation residue was taken as the SS component.

EXAMPLE 1

In coagulation waste water after coagulating and separating PTFE from an aqueous dispersion of PTFE obtained by polymerizing TFE using APFO as an emulsifier, 400 ppm of the SS component composed mainly of dispersed particles of non-coagulated PTFE, was contained. Further, the concentration of APFO in the waste water was 168 ppm, and the pH was 4.5. 1 ℓ of the waste water was put into a 2 ℓ glass beaker having FULLZONE® impeller set. With stirring, 1 ml of 10 mass% hydrochloric acid was added to adjust the pH to 2. After the pH adjustment, with stirring by the FULLZONE® impeller, 0.1 g of aluminum chloride (hereinafter referred to as $AlCl_3$) was added. The value G by the stirring with the FULLZONE® impeller was 182. The amount of $AlCl_3$ added, corresponded to 100 ppm based on the total amount of the waste water. Immediately after the addition of $AlCl_3$, coagulation of the SS component started, and white gel precipitates formed. After stirring for 10 minutes in that state, the dispersion was left to stand still for 30 minutes, whereby the coagulates settled at the bottom of the beaker, and the supernatant was colorless transparent. The supernatant was filtered by means of a filter paper having an average pore size of 10 µm, whereupon the SS component in the filtrate was measured and found to be 5 ppm.

1 ℓ of the filtrate was passed through a packed column having a capacity of 100 ml, packed with 10 ml of weakly basic IER (WA30, manufactured by Mitsubishi Chemical Corporation, hereinafter referred to as IERWA30) at a flow rate of 50 ml/hr, to carry out the adsorption operation. It took 20 hours to let 1 ℓ of the filtrate pass therethrough. During this period, the packed column was not clogged. Then, through the packed column, a 0.1 M sodium hydroxide aqueous solution was passed at a flow rate of 20 ml/hr for 1 hour to carry out the desorption operation of the adsorbed perfluorooctanoate. The concentration of the perfluorooctanoate in 20 ml of the obtained desorbed liquid was 7,577 ppm. From this result, the recovery of APFO was calculated to be 90.2%.

EXAMPLE 2

A filtrate having 6 ppm of the SS component was obtained in the same manner as in Example 1 except that instead of 100 ppm of AlCl$_3$, 50 ppm of ferrous chloride was used. Using 1 $\ell$ of the filtrate, the adsorption and desorption operations by a packed column of IERWA30 were carried out in the same manner as in Example 1, whereby the recovery of APFO was 88.5%.

EXAMPLE 3

A filtrate having 7 ppm of the SS component was obtained in the same manner as in Example 1 except that instead of 100 ppm of AlCl$_3$, 50 ppm of ferric chloride was used. Using 1 $\ell$ of the filtrate, the adsorption and desorption operations by a packed column of IERWA30 were carried out in the same manner as in Example 1, whereby the recovery of APFO was 88.7%.

EXAMPLE 4

A filtrate having 5 ppm of the SS component was obtained in the same manner as in Example 1 except that instead of 100 ppm of AlCl$_3$, 100 ppm of a 10 mass% aqueous solution of polyaluminum chloride was used. Using 1 $\ell$ of the filtrate, the adsorption and desorption operations by a packed column of IERWA30 were carried out in the same manner as in Example 1, whereby the recovery of APFO was 89.5%.

EXAMPLE 5

A filtrate having 5 ppm of the SS component was obtained in the same manner as in Example 1 except that instead of 1 ml of 10 mass% hydrochloride acid, 1 ml of 3 mass% sulfuric acid was used. Using 1 $\ell$ of the filtrate, the adsorption and desorption operations by a packed column of IERWA30 were carried out in the same manner as in Example 1, whereby there was no clogging of the packed column during the operations, and the recovery of APFO was 65.4%.

EXAMPLE 6

A filtrate having 5 ppm of the SS component was obtained in the same manner as in Example 1 except that instead of 1 ml of 10 mass% hydrochloride acid, 0.5 ml of 20 mass% nitric acid was used. Using 1 $\ell$ of the filtrate, the adsorption and desorption operations by a packed column of IERWA30 were carried out in the same manner as in Example 1, whereby there was no clogging of the packed column during the operations, and the recovery of APFO was 75.3%.

COMPARATIVE EXAMPLE 1

A filtrate having 50 ppm of the SS component was obtained in the same manner as in Example 1 except that the pH was adjusted to 4.5 by adding 0.5 ml of 10 mass% hydrochloric acid. Using 1 $\ell$ of the filtrate, the adsorption operation by a packed column of IERWA30 was carried out in the same manner as in Example 1, whereby the packed column was clogged after expiration of 12 hours, and the operation was stopped.

COMPARATIVE EXAMPLE 2

The adsorption and desorption operations were carried out in the same manner as in Example 1 except that instead of IERWA30, strongly basic IER (Diaion PA316, manufactured by Mitsubishi Chemical Corporation) was used. The recovery of APFO was 50.4%.

COMPARATIVE EXAMPLE 3

1 $\ell$ of the same coagulation waste water as used in Example 1, was put into a 2 $\ell$ glass beaker having FULLZONE® impeller set. The value G by stirring with the FULLZONE® impeller was 182. With stirring, 10 ml of lime water was added to adjust the pH to 6.8. After stirring for 10 minutes, the waste water was left to stand for 30 minutes. Then, this waste water was filtered through a filter paper having an average pore size of 10 $\mu$m, to obtain 980 ml of a colorless transparent filtrate having 65 ppm of the SS component.
To 980 ml of this filtrate, 0.5 ml of 3 mass% sulfuric acid was added to adjust the pH to 4. Then, this filtrate was passed through a packed column having a capacity of 100 ml, packed with 10 ml of strongly basic IER (PA316, manufactured by Mitsubishi Chemical Corporation), at a flow rate of 50 ml/hr. Upon expiration of about 8 hours, the packed column was clogged, and the operation was terminated.

The foregoing results are summarized in Table 1.

Table 1

| | Acid | pH | Metal salt | SS component (ppm) | IER | Amount of water passed (ml) | Recovery of APFO (%) |
|---|---|---|---|---|---|---|---|
| Example 1 | Hydrochloric acid | 2 | $AlCl_3$ | 5 | Weakly basic | 1,000 | 90.2 |
| Example 2 | Hydrochloric acid | 2 | $FeCl_2$ | 6 | Weakly basic | 1,000 | 88.5 |
| Example 3 | Hydrochloric acid | 2 | $FeCl_3$ | 7 | Weakly basic | 1,000 | 88.7 |
| Example 4 | Hydrochloric acid | 2 | PAC | 5 | Weakly basic | 1,000 | 89.5 |
| Example 5 | Sulfuric acid | 2 | $AlCl_3$ | 5 | Weakly basic | 1,000 | 65.4 |
| Example 6 | Nitric acid | 2 | $AlCl_3$ | 5 | Weakly basic | 1,000 | 75.3 |
| Comparative Example 1 | Hydrochloric acid | 4.5 | $AlCl_3$ | 50 | Weakly basic | 600 | – |
| Comparative Example 2 | Hydrochloric acid | 2 | $AlCl_3$ | 5 | Strongly basic | 1,000 | 50.4 |
| Comparative Example 3 | Sulfuric acid | 6.8 | Lime | 65 | Strongly basic | 400 | – |

According to the method for adsorbing and recovering a fluorine-containing emulsifier of the present invention, the SS component can efficiently be removed from coagulation waste water of a fluoropolymer. Further, in the adsorption operation of a fluorine-containing emulsifier in coagulation waste water by means of weakly basic IER, clogging of the packed column of weakly basic IER scarcely takes place. Further, replacement cycles for weakly basic IER will be prolonged, whereby the total amount of weakly basic IER to be used, can be reduced. Further, the recovery of the fluorine-containing emulsifier is high.

The entire disclosures of Japanese Patent Application No. 2001-357683 filed on November 22, 2001 and Japanese Patent Application No. 2002-265527 filed on September 11, 2002 including specifications, claims and summaries are incorporated herein by reference in their entireties.

## Claims

1. A method for adsorbing and recovering a fluorine-containing emulsifier, which comprises adding an inorganic acid to coagulation waste water of a fluoropolymer containing a fluorine-containing emulsifier, to adjust the pH of the waste water to a level of at least 1 and less than 6, then adding a metal chloride having a solubility of at least 5 mass% in water at 25°C, or a hydrate of the metal chloride, to the waste water, to coagulate and remove a solid content or a substance convertible to a solid content, contained in the waste water, and then contacting the waste water to a weakly basic anion exchange resin.

2. The method for adsorbing and recovering a fluorine-containing emulsifier according to Claim 1, wherein the inorganic acid is at least one member selected from the group consisting of hydrochloric acid, nitric acid or sulfuric acid.

3. The method for adsorbing and recovering a fluorine-containing emulsifier according to Claim 1 or 2, wherein the metal chloride is at least one member selected from the group consisting of aluminum chloride, polyaluminum chloride, ferrous chloride and ferric chloride.

4. The method for adsorbing and recovering a fluorine-containing emulsifier according to any one of Claims 1 to 3, wherein the metal chloride is added in an amount of at least 10 ppm and less than 500 ppm.

5. The method for adsorbing and recovering a fluorine-containing emulsifier according to any one of Claims 1 to 4, wherein the fluorine-containing emulsifier is an ammonium perfluoroalkanoate having from 6 to 12 carbon atoms.

6. The method for adsorbing and recovering a fluorine-containing emulsifier according to any one of Claims 1 to 4, wherein the fluorine-containing emulsifier is an ammonium salt of perfluorooctanoic acid, or a lithium, sodium or potassium salt of perfluorooctanoic acid.

7. The method for adsorbing and recovering a fluorine-containing emulsifier according to any one of Claims 1 to 4, wherein the fluorine-containing emulsifier is ammonium perfluorooctanoate.

8. The method for adsorbing and recovering a fluorine-containing emulsifier according to any one of Claims 1 to 7, wherein the fluoropolymer is a polytetrafluoroethylene, a tetrafluoroethylene/propylene copolymer, a tetrafluoroethylene/propylene/vinylidene fluoride copolymer or a tetrafluoroethylene/perfluoro(propyl vinyl ether) copolymer.

9. The method for adsorbing and recovering a fluorine-containing emulsifier according to any one of Claims 1 to 7, wherein the fluoropolymer is a polytetrafluoroethylene.

10. The method for adsorbing and recovering a fluorine-containing emulsifier according to any one of Claims 1 to 9, wherein the weakly basic anion exchange resin consists essentially of a polystyrene having dimethylamino groups on its side chains.

## European Patent Office

## EUROPEAN SEARCH REPORT

**Application Number**

EP 02 02 3652

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | DE 199 53 285 A (DYNEON GMBH) 10 May 2001 (2001-05-10) * page 1, line 1-36,61-63 * * example 1 * --- | 1-10 | C02F9/04 C02F1/52 C02F1/42 C02F1/58 C07C53/21 //C02F101/36, C02F103/38 |
| Y,D | WO 99 62858 A (SULZBACH REINHARD ;DYNEON GMBH (DE); FELIX BERND (DE); KAISER THOM) 9 December 1999 (1999-12-09) * page 4, line 12 - page 5, line 2 * * page 5, line 11-19 * * example 1 * --- | 1-10 | |
| D,A | US 4 369 266 A (KUHLS JUERGEN ET AL) 18 January 1983 (1983-01-18) * column 13, line 55 - column 14, line 54 * --- | 1,2 | |
| A | EP 1 094 038 A (KOCH MICROELECTRONIC SERVICE C) 25 April 2001 (2001-04-25) * abstract * * paragraphs [0020],[0021] * ----- | 1,2 | |
| | | | TECHNICAL FIELDS SEARCHED (Int.Cl.7) C02F B01J C07C |

The present search report has been drawn up for all claims

| Place of search | Date of completion of the search | Examiner |
|---|---|---|
| MUNICH | 10 February 2003 | Borello, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 02 3652

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2003

| Patent document cited in search report | | Publication date | Patent family member(s) | | Publication date |
|---|---|---|---|---|---|
| DE 19953285 | A | 10-05-2001 | DE | 19953285 A1 | 10-05-2001 |
| | | | AU | 7924000 A | 14-05-2001 |
| | | | CN | 1387498 T | 25-12-2002 |
| | | | WO | 0132563 A1 | 10-05-2001 |
| | | | EP | 1240107 A1 | 18-09-2002 |
| WO 9962858 | A | 09-12-1999 | DE | 19824614 A1 | 09-12-1999 |
| | | | AT | 222229 T | 15-08-2002 |
| | | | AU | 4370199 A | 20-12-1999 |
| | | | CA | 2334105 A1 | 09-12-1999 |
| | | | CN | 1303363 T | 11-07-2001 |
| | | | DE | 59902354 D1 | 19-09-2002 |
| | | | WO | 9962858 A1 | 09-12-1999 |
| | | | EP | 1193242 A1 | 03-04-2002 |
| | | | EP | 1084097 A1 | 21-03-2001 |
| | | | ES | 2176137 T1 | 01-12-2002 |
| | | | HU | 0102469 A2 | 28-10-2001 |
| | | | JP | 2002516892 T | 11-06-2002 |
| | | | PL | 344576 A1 | 05-11-2001 |
| | | | TR | 200003530 T2 | 21-03-2001 |
| US 4369266 | A | 18-01-1983 | DE | 2908001 B1 | 19-06-1980 |
| | | | CA | 1165926 A1 | 17-04-1984 |
| | | | DE | 3061298 D1 | 20-01-1983 |
| | | | EP | 0015481 A1 | 17-09-1980 |
| | | | JP | 1607007 C | 13-06-1991 |
| | | | JP | 2034971 B | 07-08-1990 |
| | | | JP | 55120630 A | 17-09-1980 |
| EP 1094038 | A | 25-04-2001 | US | 6203705 B1 | 20-03-2001 |
| | | | EP | 1094038 A1 | 25-04-2001 |

EPO FORM P0459

For more details about this annex : see Official Journal of the European Patent Office, No. 12/82